# EUROPEAN PATENT APPLICATION

(11) **EP 4 693 536 A1**
(43) Date of publication of application: **11.02.2026**
(21) Application number: 24193254.0
(22) Date of filing: 07.08.2024
(51) Int. Cl.: H01M 8/248

(54) **FUEL CELL STACK**

(71) Applicant: AVL List GmbH, 8020 Graz (AT); Red Bull Advanced Technology, Tilbrook, Milton Keynes MK7 8AZ (GB)
(72) Inventor: Cain, Jon, Basildon, SS15 6LN (GB); Mann, Bhagwant Tejpaul, Burnaby, 5980 (CA)
(74) Representative: Gamper, Bettina

(57) **Abstract**

the invention is related to a fuel cell stack (100) for providing a fuel cell functionality, comprising multiple fuel cells (110) stacked upon each other along a stack direction (SD), wherein end plates (122, 124) cover the stacked fuel cells (110) at both ends (120), **characterised in that** the end plates (122, 124) are connected in stack direction (SD) with each other by a tensioning system (10), wherein the tensioning system (10) comprises at least one bendable tensioning means (20) being fixed with a first tensioning end (22) at one of the end plates (122), extending at least partly along the stack direction (SD) to the other end plate (124), being wound around at least one turning means (30) at the other end plate (124), having a spring element (40) at the second tensioning end (24) fixed at one of the end plates (122, 1244) providing a spring tensioning force (STF) in the tensioning means (20) between the second tensioning end (24) and first tensioning end (22) to provide a compression force (CF) to the fuel cells (110) via the two end plates (122, 124).

## Description

The present invention is related to a fuel cell stack as well as a tensioning system for a fuel cell stack.

It is commonly known that fuel cell stacks are used to provide a fuel cell functionality. Such a fuel cell functionality can be used to generate electric energy from fuel gas or to generate fuel gas by consuming electricity.

To provide the fuel cell functionality it is also known that fuel cells are stacked upon each other along a stack direction to create a fuel cell stack. To provide gas-tight sealings between the fuel cells as well as full functionality of the fuel cell stack the fuel cells in the stack direction need to be compressed against each other. Commonly known technical solutions comprise spring elements to directly provide and apply that compression force.

One disadvantage of the present solutions is the fact that the compression force is based on increased weight and increased complexity of the overall system. The commonly known solutions provide a compression spring that is located in a sandwich end plate at least at one end of the fuel cell stack. While a first end of the fuel cell stack can comprise a single end plate, at least the opposite end of the fuel cell stack needs a sandwich end plate with basically two separate end plates and a spring space. In between those separate end plates one or more compression springs can be located to generate and provide a spring force in the direction of the stack direction of the fuel cells. That compression spring can now apply a compression force by acting against the two sandwich parts of the end plates and thereby acting as a compression spring for applying the compression force onto the fuel cells of the fuel cell stack.

The main disadvantage of the sandwich type spring element is the increased weight as well as the increased length of the fuel cell stack. A further disadvantage is the fact that the compression element formed by the spring element is complex to calibrate. This is in particular the fact if compared to different temperature, load and humidity situations for cold fuel cells, starting procedures for the fuel cell stack and the regular use of the fuel cell stack at usage temperature.

It is the object of the present invention to solve at least partly aforesaid disadvantages. In particular it is an object of the present invention to provide a fuel cell stack with a cost-efficient as well as a package and weight efficient compression force application.

Aforesaid object is solved by a fuel cell stack with the features of independent claim 1 as well as by the tensioning system with the features of independent claim 13. Further advantages and details are described with respect to the sub claims. Features of the sub claims can be combined with the features of the independent claims freely if of technical sense.

According to the present invention a fuel cell stack is designed for providing a fuel cell functionality. To provide the fuel cell functionality the fuel cell stack comprises multiple fuel cells which are stacked upon each other along a stack direction. End plates cover the stacked fuel cells at both ends and thereby form the end portions of the fuel cell stack.

An inventive fuel cell stack is characterised in that the end plates are connected in stack direction with each other by a tensioning system. The tensioning system comprises at least one bendable tensioning means being fixed with a first tensioning end at one of the end plates. Furthermore, the tensioning means extends at least partly along the stack direction to the other end plate. Additionally, the tensioning means is wound around at least one turning means at the other end plate. At a second tensioning end the tensioning means has a spring element being fixed at one of the end plates to provide a spring tensioning force in the tensioning means between the second tensioning end and the first tensioning end. By taking on the tensioning force the tensioning means provide a compression force to the fuel cells via the two end plates.

The core idea of the present invention is to provide a solution with commonly known simple and springless end plates. Therefore, the compression force needs to be applied in a separate way which is done according to the invention by a separate tensioning system. The tensioning system of the present invention comprises at least one tensioning means which can be for example a tensioning strand or a tensioning band as discussed later on. In other words, now the tensioning means are extending aside of the fuel cells and do not add upon the overall length of the fuel cell stack in stack direction. Also, the fuel cell means can extend along one of the sides or all sides of the fuel cell stack to provide in particular a balanced and symmetrical application of the tensioning force as the compression force. In other words, now the tensioning force is applied not directly by the spring element to the end plates but in a first step to the tensioning means. By the fixation of the tensioning means to the end plates in particular by having a force path into the end plates at the first tensioning end, the second tensioning end and/or the at least one turning means, the inventive tensioning systems provides possibility to transfer the spring tensioning force as compression force into the fuel cells via the two end plates.

Compared with the commonly known systems now both end plates can be configured in a simple manner. In particular no spring needs to be included no sandwich-type formation needs to be provided by one or more of the end plates. By having the tensioning means aside and along the side faces of the fuel cells the width of the fuel cell is increased but the length is decreased. By having simplified versions of the end plates and in particular avoiding the sandwich-type end plates a significant reduction in weight for the fuel cells can be achieved.

Furthermore, according to the present invention an easier access to the fuel cells as well as the tensioning system is possible. By having the tensioning system at the sides of the fuel cells, direct accessibility is provided and for example a controllability or at least a first calibration of the tensioning system and/or the spring tensioning force is possible as described later on.

In general it is unimportant if one or more of those tensioning means are provided. In particular, it is sufficient if only one tensioning means with only single turning means is provided to have a connection between the two end plates and by providing a transfer possibility to transfer the spring tensioning force into the compression force of the two end plates.

It is an advantage of the present invention if a fuel cell stack is characterised in that the tensioning system comprises at least two turning means fixed to different end plates to provide a multiple-bend path of the tensioning means. By having bendable tensioning means, in particular tensioning means having a transfer capability for force only in pull direction are provided. The multiple-bend path now provides a back and forth alignment of the tensioning means over at least two or even more turning means. In particular those turning means are provided on two or more sides of the fuel cell stack to create an in-balance situation to provide and apply the compression force symmetrically to the fuel cells between the end plates. The more bends the inventive tensioning system is creating the more exact the tensioning control can be provided. This is in particular the fact if an equal and harmonized way of transferring the spring tensioning force as a harmonized compression force to the overall side and to end plates of the fuel cell stack is necessary.

It is further an advantage according to the present invention if the fuel cell stack is characterised in that the tensioning means is flexible for bending, rigid in pull direction and flexible in push direction. That is in particular an advantage in terms of a light-weight embodiment of the tensioning means. If two or more tensioning means are provided those are in particular identical or at least identical. Having a bendable, in pull direction rigid and in push direction flexible tensioning means provides all the functionalities in a very light weight possibility so having the bendability at the turning means as well as the transferability for the spring tensioning force and pull direction. Since no additional in push forces need to be transferred and taken on by the tensioning means it can be configured to be flexible in push direction and thereby an additional light-weight advantage can be achieved.

A further advantage can be achieved if according to the present invention the fuel cell stack is characterised in that the tensioning means comprise at least one of the following embodiments:
- single strand,
- multiple parallel strands,
- belt,
- woven belt,
- reinforced belt.

Aforesaid list is a non-exhaustive list. In particular by using a specific material the light-weight advantages can be increased and the capability of providing the bendability and the rigid embodiment in pull direction can be optimized. For example, a Kevlar material, a fibre enforced material or the like can be used for the tensioning means. Depending on the value of spring tensioning force that has to be transferred and transformed into the compression force the single strand or the multiple parallel strands can be used. If an even higher value as tensioning force is necessary, belts, in particular woven and/or reinforced belts can be provided for an inventive fuel cell stack.

It is further an advantage if according to the present invention the fuel cell stack is characterised in that the second tensioning end with the spring element is fixed to the same end plate as the first tensioning end. In other words, the accessibility is increased by having accessibility to the first and the second tensioning end from one same side of the fuel cell stack being one and the same end plate. During the mounting procedure the second end plate is only needed to be accessible for winding the tensioning means around the turning means while any further configuration in particular spring calibration of the spring element can be done from one single side being the end plate for the second and the first tensioning end.

A further advantage can be achieved if according to the present invention the fuel cell stack is characterised in that the spring element comprises a wound spring, in particular having an inner end being fixed at the end plate and a circumferential end being fixed to the tensioning means. In other words, by having a wound spring the direction of the transfer of the spring force into the spring tensioning force of the tensioning means is done automatically. In particular this is done by aligning the tensioning means tangential at the connection to the spring element. Having a wound spring in particular an advantage of a linear and flat spring curve can be achieved in an easy and optimized controllability of the compression forces is achieved.

A further advantage can be achieved if according to the present invention the fuel cell stack is characterised in that the tensioning system, in particular the first end and/or the second end of the tensioning means comprise a control means for controlling the provided tensioning force. Such a control means can for example be configured as a control screw to increase or decrease the basic spring force at the spring element. This can be done during a calibration step during mounting of the fuel cell stack. It can also be part of an automated control system in particular to apply a temperature compensation control functionality for the spring tensioning force. This is in particular combined with an accessibility from one single side to the spring element and/or the first end of the tensioning means.

It is further an advantage if according to the present invention the fuel cell stack is characterised in that the first tensioning end, the second tensioning end and/or the at least one turning means are mounted to an inner surface of the respective end plate. This can be achieved by having a further and increased extension of each of the end plates over the sides of the fuel cells thereby providing an inner end surface with a mountability area for mounting the first and the second tensioning ends and/or the turning means. This helps to reduce the bending of the end plates by introducing the spring tensioning force as a compression force at those side mounting areas at the inner end surface of the respective end plate.

It can further be an advantage if according to the present invention the fuel cell stack is characterised in that the first tensioning end, the second tensioning end and/or the at least one turning means are mounted to an edge surface of the side of the respective end plate. Thereby, this width reduction of each of the end plates can be achieved but an increased bend of those respective end plates might be acceptable. By reducing the width of those end plates, the overall weight can be reduced even further.

It is a further advantage if according to the present invention the fuel cell stack is characterised in that the first tensioning system, the second tensioning end and/or the at least one turning means are mounted to an outer end surface of the respective end plate. That outer end surface is in particular facing to the opposite direction than the inner end surface. For example, additional turning means can turn the tensioning means around the edge surfaces of each of the respective end plates and thereby an even more optimized accessibility at the respective end plate from outside of that end plate is provided. Additionally, it is a possibility to combine the advantages of aforesaid two embodiments by having a decreased size in width direction for the respective end plate, having an increased and optimized accessibility and in particular having an optimized transfer possibility to transfer the spring tensioning force as a compression force into the end plates.

It is a further advantage if according to the present invention the fuel cell stack is characterised in that the tensioning system comprises pulley block means to additionally influence the provided spring tensioning force. A pulley block means allows the increase or decrease of spring tensioning force by multiplying the spring tensioning force with a respective level. This allows either an additional length compensation and/or an additional force application by still having a relatively small and light-weight spring element.

It is a further advantage if according to the present invention the fuel cell stack is characterised in that the tensioning means extend fully or essentially fully along the stack direction. In particular, no angled forces are involved in that embodiment. Furthermore, lever arms at the connection points to the respective end plates can be reduced and the alignment of the provided spring tensioning force with the to be provided compression force is optimized.

It is a further object of the present invention to provide a tensioning system for a fuel cell stack according to the present invention. Such an inventive tensioning system is characterised in that it comprises at least one bendable tensioning means being fixable with a first tensioning end at one of the end plates, extendable at least partly along the stack direction to the other end plate, being windable around at least one turning means at the other end plate, having a spring element at the second tensioning end fixable at one of the end plates and providing a spring tensioning force in the tensioning means between the second tensioning end and the first tensioning end. Thereby, the tensioning system provides a compression force to the fuel cells via the two end plates. An inventive tensioning system provides the same advantages which have been described in detail with respect to the inventive fuel cell stack.

The present invention is discussed in further detail with respect to the accompanying drawings. Those show in a schematically way:
- Figure 1: an inventive embodiment of fuel cell stack without the tensioning system,
- Figure 2: a first embodiment of the tensioning system,
- Figure 3: a further embodiment of the inventive tensioning system,
- Figure 4: a further embodiment of the inventive tensioning system,
- Figure 5: a further embodiment of the inventive tensioning system,
- Figure 6: a further embodiment of the inventive tensioning system,
- Figure 7: an embodiment of inventive tensioning means,
- Figure 8: a further embodiment of an inventive tensioning means,
- Figure 9: a further embodiment of an inventive tensioning means and
- Figure 10: a further embodiment of an inventive tensioning means.

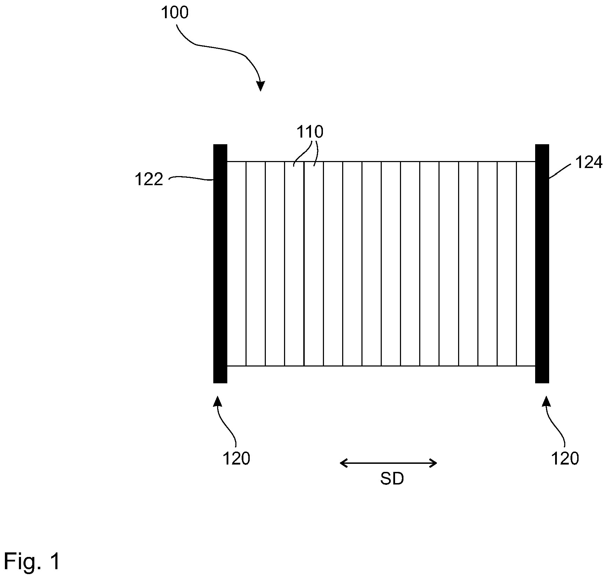

In figure 1 a fuel cell stack 100 is depicted. It comprises of several and multiple fuel cells 110 which is stacked upon each other from left to right along the stack direction SD. At the two ends 120 of the fuel cell stack 100 end plates 122 and 124 are provided. To have a gas-tight sealing for each of the fuel cells 110 a compression force CF is necessary to be applied along the stack direction SD. That tensioning is discussed with further detail by a tensioning system 10 according to the following figures.

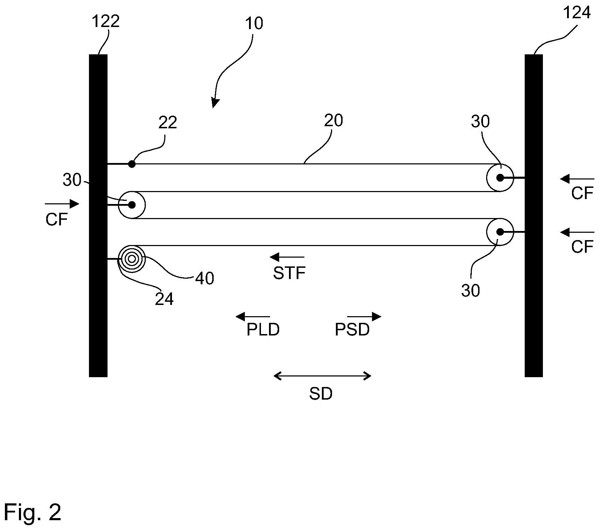

In figure 2 the fuel cell stack 100 according to figure 1 is depicted but only with respect to the end plates 122 and 124. For a better overview no fuel cells 110 are shown. One strand like or belt like tensioning means 20 extends from a first tensioning end 22 at the left and first end plate 122. From that fixation point the tensioning means 20 extend to the right second end plate 124 and is bent around a turning means 30 for example in form of a roll. The tensioning means 20 now extends back to the first end plate 122 and is wound again around another turning means 30 in form of a roll. Finally, the tensioning means 20 extends one further time to the right and the second end plate 124 and is bent around a final and third turning means 30 in form of the same roll. The second tensioning end 24 is provided with the spring element 40 being a wound spring. The functionality of the tensioning system 10 is described as follows.

By having a spring tensioning force STF applied by the spring element 40 in pull direction PLD the tension is applied across the tensioning means 20. At the separate connection points, meaning at the first tensioning end 22, at the three turning means 30 as well as the second tensioning end 24 a force transfer can be applied from the tensioning system 10 into the respective end plate 120 and 124. Thereby, at those ends 122, 124 the compression forces CF are applied via the two end plates 122 and 124 along the stack direction SD to the fuel cells 110. Since the tensioning means 20 is provided as a strand or a belt no transferability for any other force is necessary and applicable in the push direction PSD. Furthermore, a flexibility in push direction PSD for this embodiment of the tensioning means 20 is possible.

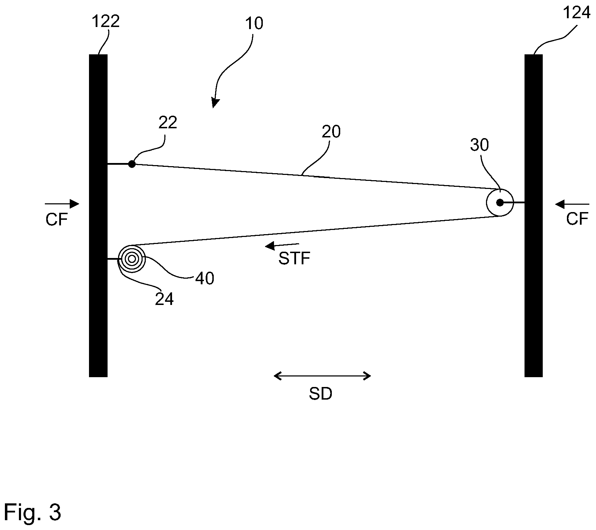

In figure 3 a very general and abstract possibility of the tensioning system 10 is depicted. Here only one single turning means 30 is provided. While having parallel tensioning means 20 and in particular an extension along or in general along the stack direction SD is of advantage as described in relation to figure 2, in general also a solution with an angled extension of the tensioning means 20 according to figure 3 is possible. Although an additional and multiple application of turning means 30 and a parallel extension of the tensioning means 20 as wells as a respective identical embodiment of all of the turning means 30 according to figure 2 is an advantage, the general concept of the present invention and the respective discussed benefits can also be achieved by an embodiment according to figure 3.

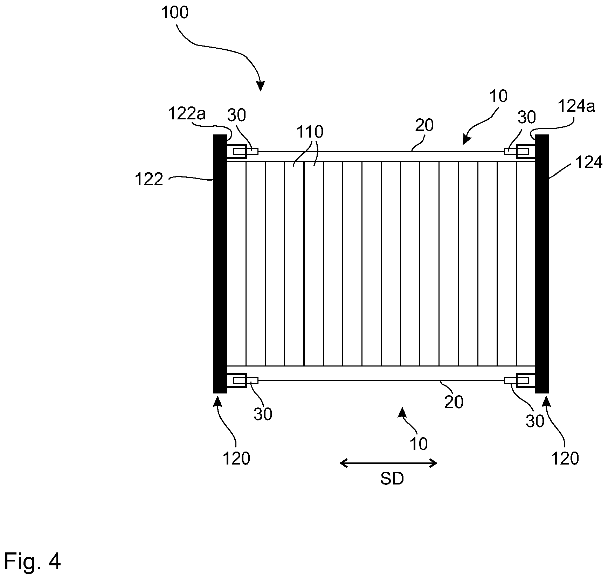

The figures 4, 5 and 6 show different positioning possibilities for the turning means 30. In figure 4 the tensioning system 10 is applied to both sides, the upper and the lower side, of the fuel cell stack 100. Here, the two end plates 122 and 124 extend further beyond the fuel cells 110 perpendicular to the stack direction SD. In this additional mounting portion of the end plates 122 and 124 the tensioning system 10 can in form of the turning means 30 can now be mounted on the inner end surface 122a into the end surface 124a.

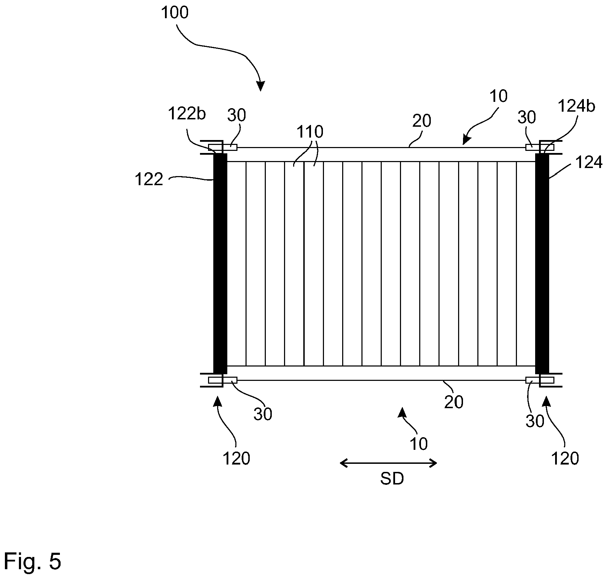

Figure 5 shows an alternative mounting solution. Here the two end plates 122 and 124 can be reduced in terms of their extension perpendicular to the stack direction SD. Still a mounting area is provided for mounting the turning means 30 now at the edge surfaces 122a and 124b. By decreasing the size of the end plates 122 and 124 the overall weight of the tensioning system 10 can be reduced.

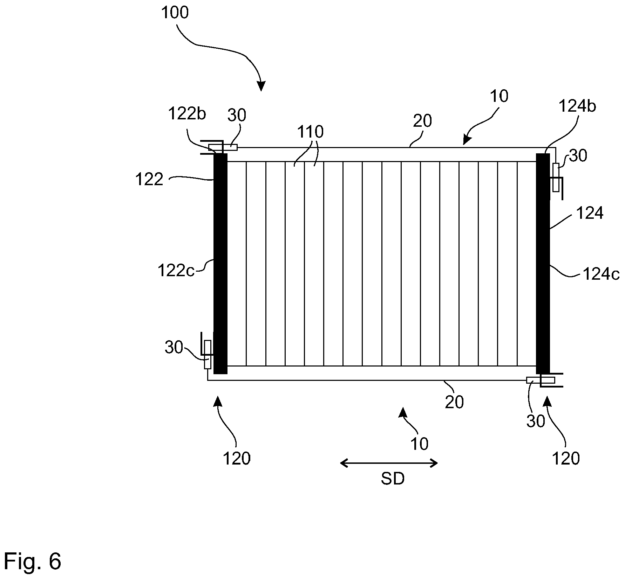

Figure 6 shows a further possibility in particular for an optimized accessibility to the turning means 30. Here the tensioning means 20 is guided across the edge of each of the end plates 122 and 124 to a turning means 30 being mounted on the respective outer end surface 122c and outer surface 124c.

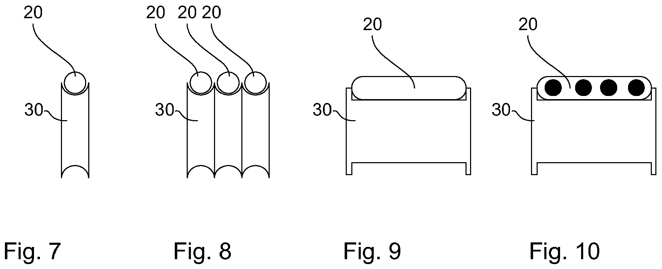

Figures 7, 8, 9 and 10 show different solutions for a tensioning means 20. The turning means 30 according to figure 7 is configured to hold and bent a single strand as tensioning means 20. If a further and additional spring tensioning force STF is necessary here in figure 8 three parallel identical strands are used as tensioning means 20 and a respective triple turning means 30 is provided. For even further increased value of spring tensioning force STF the solutions of figure 9 and figure 10 can be provided. Belts, in particular woven belts, like figure 9 or reinforced belts like figure 10 can be used as tensioning means 20 in being wound around drum-like turning means 30.

The aforesaid discussion of the embodiment describes the present invention only by the way of example.

### Reference signs

- 10: tensioning system
- 20: tensioning means
- 22: first tensioning end
- 24: second tensioning end
- 30: turning means
- 40: spring element

- 100: Fuel cell stack
- 110: fuel cell
- 120: end
- 122: end plate
- 122a: inner end surface
- 122b: edge surface
- 122c: outer end surface
- 124: end plate
- 124a: inner end surface
- 124b: edge surface
- 124c: outer end surface

- SD: stack direction
- STF: spring tensioning force
- CF: compression force
- PLD: pull direction
- PSD: pull direction

## Claims

1. Fuel cell stack (100) for providing a fuel cell functionality, comprising multiple fuel cells (110) stacked upon each other along a stack direction (SD), wherein end plates (122, 124) cover the stacked fuel cells (110) at both ends (120), **characterised in that** the end plates (122, 124) are connected in stack direction (SD) with each other by a tensioning system (10), wherein the tensioning system (10) comprises at least one bendable tensioning means (20) being fixed with a first tensioning end (22) at one of the end plates (122), extending at least partly along the stack direction (SD) to the other end plate (124), being wound around at least one turning means (30) at the other end plate (124), having a spring element (40) at the second tensioning end (24) fixed at one of the end plates (122, 124) providing a spring tensioning force (STF) in the tensioning means (20) between the second tensioning end (24) and first tensioning end (22) to provide a compression force (CF) to the fuel cells (110) via the two end plates (122, 124).

2. Fuel cell stack (100) according to claim 1, **characterised in that** the tensioning system (10) comprises at least two turning means (30) fixed to different end plates to provide a multi-bend path of the tensioning means (20).

3. Fuel cell stack (100) according to any of the preceding claims, **characterised in that** the tensioning means (20) is flexible for bending, ridged in pull direction (PLD) and flexible in push direction (PSD).

4. Fuel cell stack (100) according to any of the preceding claims, **characterised in that** the tensioning means (20) comprise at least one of the following embodiments:
- Single strand
- Multiple parallel strands
- Belt
- Woven belt
- Reinforced belt

5. Fuel cell stack (100) according to any of the preceding claims, **characterised in that** the second tensioning end (24) with the spring element (40) is fixed to the same end plate (122) as the first tensioning end (22).

6. Fuel cell stack (100) according to any of the preceding claims, **characterised in that** the spring element (40) comprises a wound spring, in particular having an inner end being fixed at the end plate (122, 124) and a circumferential end being fixed to the tensioning means (20).

7. Fuel cell stack (100) according to any of the preceding claims, **characterised in that** the tensioning system (10), in particular the first end (22) and/or the second end (24) of the tensioning means (20) comprise a control means for controlling the provided spring tensioning force (STF).

8. Fuel cell stack (100) according to any of the preceding claims, **characterised in that** the first tensioning end (22), the second tensioning end (24) and/or the at least one turning means (30) are mounted to an inner end surface (122a, 124a) of the respective end plate (122, 124).

9. Fuel cell stack (100) according to any of the preceding claims, **characterised in that** the first tensioning end (22), the second tensioning end (24) and/or the at least one turning means (30) are mounted to an edge surface (122b, 124b) at the side of the respective end plate (122, 124).

10. Fuel cell stack (100) according to any of the preceding claims, **characterised in that** the first tensioning end (22), the second tensioning end (24) and/or the at least one turning means (30) are mounted to an outer end surface (122c, 124c) of the respective end plate (122, 124).

11. Fuel cell stack (100) according to any of the preceding claims, **characterised in that** the tensioning system (10) comprises pulley block means to additionally influence the provided spring tensioning force (STF).

12. Fuel cell stack (100) according to any of the preceding claims, **characterised in that** the tensioning means (20) extend fully or essentially fully along the stack direction (SD).

13. Tensioning system (10) for a fuel cell stack (100) with the features of any of claims 1 to 12, **characterised in that** it comprises at least one bendable tensioning means (20) being fixable with a first tensioning end (22) at one of the end plates (122), extendable at least partly along the stack direction (SD) to the other end plate (124), being windable around at least one turning means (30) at the other end plate (124), having a spring element (30) at the second tensioning end (24) fixable at one of the end plates (122) providing a spring tensioning force (STF) in the tensioning means (20) between the second tensioning end (24) and first tensioning end (22) to provide a compression force (CF) to the fuel cells (110) via the two end plates (122, 124).
